# EUROPEAN PATENT SPECIFICATION

(11) **EP 2 768 186 B1**
(45) Date of publication and mention of the grant of the patent: **31.08.2016**
(21) Application number: 12846912.9
(22) Date of filing: 09.11.2012
(51) Int. Cl.: H04L 12/70, H04W 72/04, H04W 76/02

(54) **METHOD, TERMINAL AND BASE STATION FOR COOPERATIVE COMMUNICATION**
VERFAHREN, ENDGERÄT UND BASISSTATION FÜR KOOPERATIVE KOMMUNIKATION
PROCÉDÉ, TERMINAL ET STATION DE BASE POUR UNE COMMUNICATION COOPÉRATIVE

(30) Priority: 09.11.2011 CN 201110352511
(43) Date of publication of application: 20.08.2014
(73) Proprietor: Huawei Technologies Co., Ltd., Longgang District Shenzhen, Guangdong 518129 (CN)
(72) Inventor: LIU, Sheng, Shenzhen Guangdong 518129 (CN)
(74) Representative: Körber, Martin Hans
(86) International application number: PCT/CN2012/084380
(87) International publication number: WO 2013/067961

(56) References cited:
- WO-A1-2010/003270
- WO-A1-2011/123809
- WO-A2-2011/129634
- CN-A- 101 141 471
- CN-A- 101 385 289
- CN-A- 101 978 640
- US-A1- 2008 002 658
- US-A1- 2011 244 908

## Description

### TECHNICAL FIELD

The present invention relates to the field of communication technologies, particularly to a method, terminal, and base station for cooperative communication.

### BACKGROUND

There are two types of manners of using frequency spectrum in a mobile communications system, that is, FDD (Frequency Division Duplex) and TDD (Time Division Duplex), where the FDD manner is the manner that is applied most at present. FDD frequency spectrum is symmetrically allocated, mainly because the mobile communications system was mainly used for voice communication before 3G (the 3rd generation mobile communication), and voice services were symmetrical between an uplink and a downlink. However, services of a new generation mobile communications system, such as a current or future LTE (Long Term Evolution) or the like, are mostly data services, and data services are distinguished from voice services by a primary characteristic that downlink and uplink service volumes of data services are asymmetric, with a downlink service volume far larger than a uplink service volume. Because data services, mainly mobile Internet services, are mainly downloading of information by a user from a server, while data uploaded by the user is far less than downloaded data.

As can be seen from a trend of development in downlink and uplink service volumes of the mobile communications system in recent years, despite the increases in both the downlink and uplink service volumes, the downlink service volume increases faster, and asymmetry between the downlink and uplink service volumes is increasingly large. It is expected that by 2012, a proportion of the uplink and downlink service volumes of mobile communication will become unbalanced and is less than 1:3..Despite that frequency spectrum efficiency in an uplink direction is usually lower than frequency spectrum efficiency in a downlink direction, when the asymmetry between the downlink and uplink service volumes is too high, wasting of an uplink frequency spectrum resource due to a symmetrical distribution of FDD frequency spectrum is increasingly prominent. For example, it is presumed that the frequency spectrum efficiency in the downlink direction is 4 bit/Hz, the frequency spectrum efficiency in the uplink direction is 2.5 bit/Hz, whereas the proportion of the uplink and downlink service volumes is 1:4, and FDD carrier bandwidth is 20 MHz, then a rate in the downlink direction can reach 80 Mbps, and a rate in the uplink direction can reach 50 Mbps. However, because the proportion of the uplink and downlink service volumes is 1:4, when the rate in the downlink direction reaches 80 Mbps, the rate in the uplink direction actually required for transmission is 20 Mbps. That is to say, uplink frequency spectrum with bandwidth of only 8 MHz is enough for use in the uplink direction, and the remaining 12 MHz of the frequency spectrum resource is not put into effective use. It can be seen that, effective utilization of the uplink frequency spectrum of the current mobile communications system is very low, and there is a severe problem of wasting the frequency spectrum source.

US 2008/002658 discloses a method for implementing a peer-to-peer communication link between two wireless devices. An originator device sends a peer-to-peer link request to the network controller that includes the originating wireless device ID and a target wireless device ID. The net work controller then allocates a channel for the peer-to-peer link. An invitation message is then sent to the target wireless device with the originator device ID and the allocated channel. The target device accepts the invitation and starts listening to the allocated peer-to-peer channel(s). The network controller sends a confirmation message to the originator wireless device that a peer-to-peer link has been established. This confirmation message may also provide the allocated peer-to-peer channel(s) to the originator device. The originator device can then start a session on the peer-to-peer link by transmitting information to the target device. Further, document WO2011123809 A1 discloses HARQ management, scheduling, and measurements, among other things, for cooperative communication. In particular, it discloses the indication between mobile device and eNB of a "helping mechanism" which may include configuration mechanisms for the cooperative transmission, and corresponds to the notification of a selected manner of cooperative communication in the present application.

### SUMMARY

Embodiments of the present invention provide a method, terminal, and base station for cooperative communication, as captured in the appended claims, to solve a problem of wasting frequency spectrum in a mobile communications system by improving effective utilization of uplink frequency spectrum.

An embodiment of the present invention provides a method for cooperative communication, including receiving a for establishing intercommunication with another terminal from at least one terminal, where the request includes communication information and identifiers of the at least one terminal and the another terminal; according to the communication information in the request of establishing the intercommunication, allocating an available frequency spectrum resource for the intercommunication between the at least one terminal and the another terminal, where the available frequency spectrum resource includes idle uplink frequency spectrum; sending a response message to the at least one terminal and the another terminal, where the response message includes information about the available frequency spectrum resource, which is used for indicating the available frequency spectrum resource, and identifiers of the at least one terminal and the another terminal, so that the at least one terminal can send data to the another terminal according to the identifier of the another terminal the identifier of the another terminal and by using the available frequency spectrum resource, or the at least one terminal and the another terminal can perform end-to-end intercommunication according to the identifiers of the at least one terminal and the another terminal and by using the available frequency spectrum resource; the communication information in the request of the at least one terminal establishing the intercommunication with the another terminal includes a selected manner of cooperative communication between the at least one terminal and the another terminal, and a size of data required for the intercommunication; accordingly, the allocating an available frequency spectrum resource for the intercommunication between the at least one terminal and the another terminal according to the communication information in the request of establishing the intercommunication includes: traversing the frequency spectrum resource and obtaining information about idle periods of time of the uplink frequency spectrum, and allocating the idle uplink frequency spectrum as the end-to-end available frequency spectrum resource between the at least one terminal and the another terminal according to the manner of the cooperative communication between the at least one terminal and the another terminal, and the size of the data required for the intercommunication between the at least one terminal and the another terminal.

Optionally, the sending data to the another terminal by the at least one terminal, according to the identifier of the another terminal and by using the available frequency spectrum resource includes: sending data from a base station by the at least one terminal to one or more of the another terminal according to the identifier of the another terminal and by using the idle uplink frequency spectrum.

Optionally, that the at least one terminal and the another terminal can perform, according to the identifiers of the at least one terminal and the another terminal and by using the usable frequency spectrum resource, the intercommunication includes: when data packets are sent to the at least one terminal and the another terminal respectively, the at least one terminal and the another terminal can perform, according to the identifiers of the at least one terminal and the another terminal and by using the idle uplink frequency spectrum, end-to-end intercommunication.

Optionally, the sending the data by the at least one terminal to the another terminal according to the identifier of the another terminal and by using the available frequency spectrum resource includes: the at least one terminal being a plurality of terminals with the number of at least two, and sending data packets carrying the identifier of the another terminal by the base station to the plurality of terminals by using the downlink frequency spectrum, so that the plurality of terminals can send the data packets to the another terminal according to the identifier of the another terminal and by using the idle uplink frequency spectrum.

Optionally, that the at least one terminal and the another terminal can perform, according to the identifiers of the at least one terminal and the another terminal and by using the available frequency spectrum resource, the intercommunication includes: the at least one terminal and the another terminal can perform the intercommunication according to the identifiers of the at least one terminal and the another terminal and by using the idle uplink frequency spectrum.

Optionally, that the at least one terminal can, by using the idle uplink frequency spectrum, send the data to the another terminal or perform the end-to-end intercommunication with the another terminal includes: sending the data carrying the identifier of the another terminal by the at least one terminal, by using the idle uplink frequency spectrum; and obtaining the data sent from the at least one terminal by the another terminal, by sensing the idle uplink frequency spectrum.

Optionally, that the at least one terminal can, by using the idle uplink frequency spectrum, send the data to the another terminal or perform the end-to-end intercommunication with the another terminal includes: requesting the another terminal by the at least one terminal to establish the end-to-end intercommunication; and performing the end-to-end intercommunication by the at least one terminal according to a response message of the another terminal and by using the idle uplink frequency spectrum.

A method for cooperative communication is provided and the method includes: sending a request of establishing intercommunication with another terminal by at least one terminal to a base station, where the request includes communication information and identifiers of the at least one terminal and the another terminal; receiving a response message of the base station by the at least one terminal, where the response message includes information about an available frequency spectrum resource and identifiers of the at least one terminal and the another terminal, and the frequency spectrum information is configured to, according to the communication information in the request, indicate the available frequency spectrum resource allocated by the base station for the intercommunication between the at least one terminal and the another terminal, where the available frequency spectrum resource is idle uplink frequency spectrum; sending data by the at least one terminal to the another terminal according to the identifier of the another terminal the identifier of the another terminal and by using the available frequency spectrum resource, or according to the identifiers of the at least one terminal and the another terminal, so that the at least one terminal and the another terminal can perform end-to-end intercommunication by using the available frequency spectrum resource.

An embodiment of the present invention provides a base station, configured to transmit a signal to a terminal or receive a signal from the terminal in a mobile communications system, and the base station includes a receiving module, a resource scheduling module, and a responding module, where the receiving module is configured to receive a request for establishing intercommunication with another terminal from at least one terminal, where the request includes communication information and identifiers of the at least one terminal and the another terminal; the resource scheduling module is configured to, according to the communication information in the request of establishing the intercommunication, allocate an available frequency spectrum resource for the intercommunication between the at least one terminal and the another terminal, where the available frequency spectrum resource includes idle uplink frequency spectrum; the responding module is configured to send a response message to the at least one terminal and the another terminal, where the response message includes information about the available frequency spectrum resource, which is used for indicating the available frequency spectrum resource, and the identifiers of the at least one terminal and the another terminal, so that the at least one terminal can send data to the another terminal according to the identifier of the another terminal the identifier of the another terminal and by using the available frequency spectrum resource, or the at least one terminal and the another terminal can perform end-to-end intercommunication according to the identifiers of the at least one terminal and the another terminal and by using the available frequency spectrum resource.

An example of the present invention provides a terminal, where the terminal includes: a requesting module, a receiving module, and a cooperative communication module, where the requesting module is configured to send a request of establishing intercommunication with another terminal to a base station, where the request includes communication information and identifiers of the terminal and the another terminal; the receiving module is configured to receive a response message of the base station, where the response message includes information about an available frequency spectrum resource and the identifiers of the at least one terminal and the another terminal, and the frequency spectrum information is configured to indicate the available frequency spectrum resource allocated by the base station for the intercommunication between the terminal and the another terminal according to the communication information in the request, where the available frequency spectrum resource is idle uplink frequency spectrum; the cooperative communication module is configured to enable the terminal to send data to the another terminal according to the identifier of the another terminal the identifier of the another terminal and by using the available frequency spectrum resource, or enable the terminal and the another terminal to perform end-to-end intercommunication according to the identifiers of the at least one terminal and the another terminal and by using the available frequency spectrum resource.

An example of the present invention provides a communications system, including a base station, at least one terminal, and another terminal, where the at least one terminal is configured to send a request of establishing intercommunication with the another terminal to the base station, where the request includes communication information and identifiers of the at least one terminal and the another terminal; the base station is configured to receive the request of establishing the intercommunication, and according to the communication information, allocate an available frequency spectrum resource for the intercommunication between the at least one terminal and the another terminal, where the available frequency spectrum resource is idle uplink frequency spectrum, and the base station is further configured to send a response message to the at least one terminal and the another terminal, where the response message includes information about the available frequency spectrum resource, which is used for indicating the available frequency spectrum resource, and the identifiers of the at least one terminal and the another terminal, so that the at least one terminal can send data to the another terminal according to the identifier of the another terminal the identifier of the another terminal and by using the available frequency spectrum resource, or the at least one terminal and the another terminal can perform end-to-end intercommunication according to the identifiers of the at least one terminal and the another terminal and by using the available frequency spectrum resource.

It can be seen that, the embodiments of the present invention provide a method and a base station for cooperative communication. A cooperative communication relationship between terminals is established by a base station, where the cooperative communication relationship is that the terminals can directly transmit service data to each other by using uplink frequency spectrum in the communications system, that is, the terminals, which are in the cooperative communication relationship established by the base station, can directly transmit terminal-to-terminal service data to each other by using the uplink frequency spectrum, without through the base station. In this way, the base station effectively utilizes an idle frequency band in the uplink frequency spectrum to transmit the service data between the terminals, thereby improving effective utilization of the uplink frequency spectrum.

### BRIEF DESCRIPTION OF DRAWING(S)

FIG. 1 shows a schematic flowchart of a method for cooperative communication in Embodiment 1 of the present invention;
FIG. 2 shows a diagram of frequency spectrum of a method for cooperative communication in an embodiment of the present invention;
FIG. 3a to FIG. 3d show schematic diagrams of cooperative communication manners in an embodiment of the present invention;
FIG. 4 shows a schematic diagram of cooperative communication in an embodiment of the present invention;
FIG. 5 shows a schematic flowchart of a method for cooperative communication in Embodiment 2 of the present invention;
FIG. 6 shows a schematic diagram of a base station in Embodiment 3 of the present invention; and
FIG. 7 shows a schematic diagram of a terminal in Embodiment 4 of the present invention.

### DESCRIPTION OF EMBODIMENTS

The following clearly describes the technical solutions in the embodiments of the present invention with reference to the accompanying drawings in embodiments of the present invention.

The embodiments of the present invention provide a method, terminal, and base station for cooperative communication. A cooperative communication relationship between terminals is established by a base station, where the cooperative communication relationship is that the terminals can directly transmit service data to each other by using uplink frequency spectrum in a communications system, that is, the terminals, which are in the cooperative communication relationship established by the base station, can directly transmit terminal-to-terminal service data to each other by using the uplink frequency spectrum, without through the base station. In this way, the base station effectively utilizes an idle frequency band in the uplink frequency spectrum to transmit the service data between the terminals, thereby improving effective utilization of the uplink frequency spectrum.

### Embodiment 1

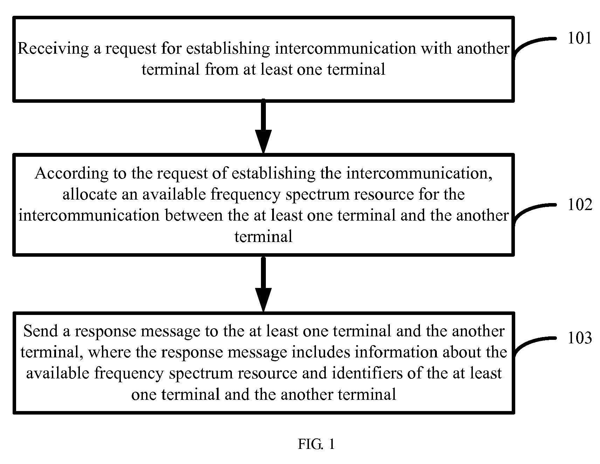

As shown in FIG. 1 to FIG. 3, a method for cooperative communication in Embodiment 1 of the present invention includes:
Step 101: Receive a request for establishing intercommunication with another terminal from at least one terminal, where the request includes communication information and identifiers of the at least one terminal and the another terminal;
Step 102: According to the communication information in the request of establishing the intercommunication, allocate an available frequency spectrum resource for the intercommunication between the at least one terminal and the another terminal, where the available frequency spectrum resource includes idle uplink frequency spectrum;
Step 103: Send a response message to the at least one terminal and the another terminal, where the response message includes information about the available frequency spectrum resource, which is used for indicating the available frequency spectrum resource, and the identifiers of the at least one terminal and the another terminal, so that the at least one terminal can send data to the another terminal according to the identifier of the another terminal the identifier of the another terminal and by using the available frequency spectrum resource, or the at least one terminal and the another terminal can perform end-to-end intercommunication according to the identifiers of the at least one terminal and the another terminal and by station, utilization of the UL is only about 30% to 50%; therefore, the UL always has idle periods of time, for example, t1 and t2 are the idle periods of time of the UL. The base station allocates the idle periods of time of the UL to terminals such as UE1 and UE2 according to the manner of the intercommunication between the using the available frequency spectrum resource.

In the above step 101, before a base station receives the request of the at least one terminal establishing intercommunication with the another terminal, in order to implement the communication with the another terminal, the at least one terminal is required to determine content of the request sent to the base station, so that the base station can allocate an uplink frequency spectrum resource for the intercommunication between the terminals according to the content of the request. The at least one terminal is further required to predetermine the another terminal required to perform the intercommunication, and at the same time determine an intercommunication manner and a size of transmitted data.

Therefore, the request of at least one terminal establishing the intercommunication with the another terminal includes the identifier of the another terminal required to perform the intercommunication, the manner of the intercommunication between the at least one terminal and the another terminal, and the size of the data volume required to be transmitted to each other.

Therefore, the communication information in the request of the at least one terminal establishing the intercommunication with the another terminal includes a selected manner of cooperative communication between the at least one terminal and the another terminal and the size of the data required for the intercommunication;

Accordingly, the allocating an available frequency spectrum resource for the intercommunication between the at least one terminal and the another terminal according to the communication information in the request of establishing the intercommunication includes:
traversing the frequency spectrum resource and obtaining information about idle periods of time of uplink frequency spectrum, and allocating the idle uplink frequency spectrum as the end-to-end available frequency spectrum resource between the at least one terminal and the another terminal according to the manner of the cooperative communication between the at least one terminal and the another terminal and the size of the data required for the intercommunication between the at least one terminal and the another terminal. In the above step 102, after the base station receives the request of the at least one terminal establishing the intercommunication with the another terminal, according to the content of the request, such as the manner of the intercommunication between the terminals and the size of the transmitted data, allocates the uplink frequency spectrum resource between the terminals, where an allocation manner is mainly applying the idle periods of time of the uplink frequency spectrum in the intercommunication between the terminals.

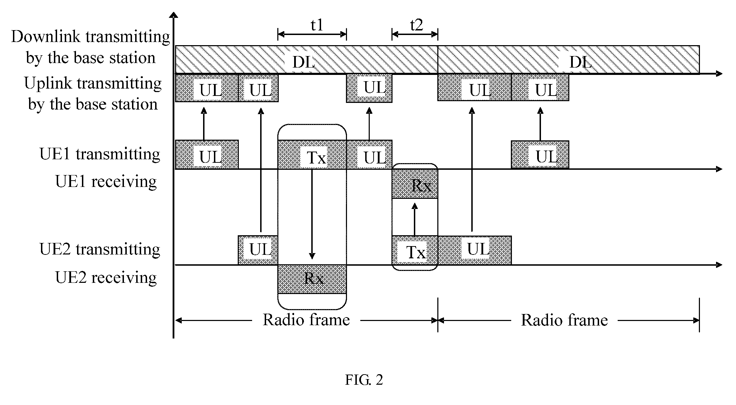

Please refer to FIG. 2 for details on the above operations. Downlink frequency spectrum of the base station is DL, and uplink frequency spectrum of the base station is UL. With respect to the DL of the base terminals and a size of data required to be transmitted between the terminals. For example, the base station allocates t1 as a sending timeslot Tx of UE1, used for sending data by UE1 to UE2, and the base station allocates t2 as a receiving timeslot Rx of UE1, used for receiving data sent by UE2.

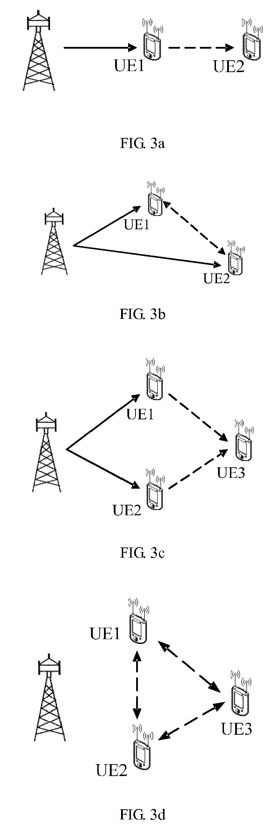

As shown in FIG. 3a, FIG. 3b, FIG. 3c, and FIG. 3d, manners of intercommunication between at least one terminal and another terminal include four manners. Certainly, specific implementation of the present invention is not limited to these four manners.

As shown in FIG. 3a, a first manner in the manners of the intercommunication between the at least one terminal and the another terminal includes:
the base station sends data packets to at least one terminal (such as UE1) by using downlink frequency spectrum (DL), where the data packets carry an identifier of another terminal (UE2), so that the at least one terminal (UE1) can send, by using the information about the idle periods of time responded by the base station, the data packets to the another terminal (UE2) to which the identifier in the data packets corresponds.

It can be seen that, the first manner in the manners of intercommunication between the at least one terminal (UE1) and the another terminal is that the at least one terminal (UE1) forwards the data from the base station to one or more of the another terminal according to the identifier of the another terminal and by using the uplink frequency spectrum.

This embodiment is particularly applicable to some specific scenarios, for example, quality of a radio channel between the base station and UE1 is good, and quality of a radio channel between the base station and UE2 is poor, or UE2 is just situated in a blind area of signals of a certain base station, and quality of a radio channel between UE1 and UE2 is good, and in this way, UE2 can communicate with the base station through UE1, or the base station can communicate with UE2 through UE1; for another example, a capacity of the radio channel between the base station and UE1 exceeds a channel capacity required for transmission of data packets of UE1, and in this way, data to be transmitted to UE2 can be firstly transmitted to UE1 by using an extra channel capacity, an idle time of the uplink frequency spectrum is waited for, and then UE1 uses this idle uplink frequency resource to forward data packets of UE2 to UE2. Because UE1 uses the idle timeslot of the uplink frequency spectrum to forward data X2 of UE2 to UE2, a system capacity is increased.

As shown in FIG. 3b, a second manner in the manners of intercommunication between the at least one terminal (UE1) and the another terminal includes:
the base station sends data packets to at least one terminal (UE1) and another terminal (UE2) respectively by using downlink frequency spectrum (DL), where data packets sent by the base station to the another terminal (UE2) carry an identifier of the at least one terminal (UE1), so that the another terminal (UE2) can send, by using the information about the idle periods of time responded by the base station, data packets to the at least one terminal (UE1) to which the identifier in the data packets corresponds.

It can be seen that, the second manner in the manners of intercommunication between the at least one terminal (UE1) and the another terminal is that, while the base station is sending the data packets to the at least one terminal (UE1), the another terminal forwards data from the base station to the at least one terminal (UE1) according to the identifier of the at least one terminal and by using the idle uplink frequency spectrum; alternatively, while the base station is sending the data packets to the at least one terminal and the another terminal respectively, the at least one terminal and the another terminal perform end-to-end intercommunication according to the identifiers of the at least one terminal and the another terminal and by using the idle uplink frequency spectrum.

A benefit of the second manner in the manners of intercommunication between the at least one terminal (UE1) and the another terminal is that, the data packets are sent to the at least one terminal through two channels, that is, downlink and uplink channels, and if the sent data packets are the same, packet loss can be effectively prevented, stability of the data transmission is increased; if the sent data packets are different, a transmission speed from the base station to the at least one terminal (UE1) can be effectively increased.

As shown in FIG. 3c, a third manner in the manners of intercommunication between the at least one terminal (UE1) and the another terminal is similar to the first manner, where the at least one terminal in the third manner is a plurality of terminals (UE1, UE2) with the number of at least two, and the base station sends data packets carrying an identifier of another terminal (UE3) to the plurality of terminals (UE1, UE2) by using downlink frequency spectrum (DL), so that the plurality of terminals (UE1, UE2) can send the data packets carrying the identifier of the another terminal (UE3) to the another terminal (UE3) according to the identifier of the another terminal and by using idle uplink frequency spectrum (UL).

It can be seen that, the larger the number of the at least one terminal, the faster the transmission rate of the data sent from the base station to the another terminal.

As shown in FIG. 3d, a fourth manner in the manners of intercommunication between the at least one terminal (UE1) and the another terminal includes that: while responding to the at least one terminal (UE1) with information about idle periods of time of uplink frequency spectrum, the base station is also sending the information about the idle periods of time of the uplink frequency spectrum to other terminals (UE2, UE3), so that the at least one terminal (UE1) and the other terminals (UE2, UE3) can perform end-to-end (terminal-to-terminal, Device to Device) intercommunication according to identifiers of the at least one terminal and the other terminals and by using idle uplink frequency spectrum. In this way, a capacity of a communications system can be expanded through the uplink frequency spectrum.

The above terminals may be a mobile phone, a tablet computer, a portable computer, and other any electronic devices that have a function of receiving or transmitting radio signals, such as some data cards, routers, and the like.

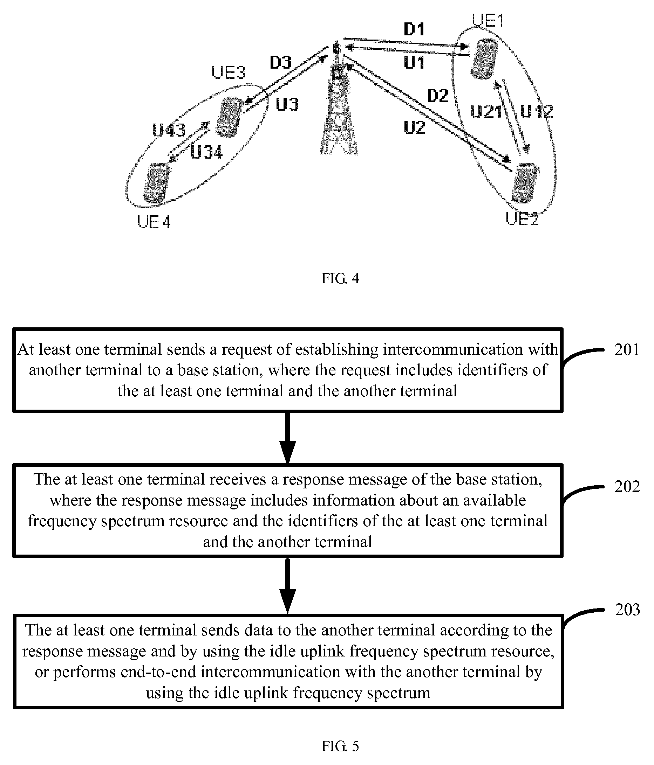

Furthermore, in a unified communications system, a manner for performing cooperative communication is not limited to using one of the above manners only, and various manners can be used simultaneously to perform the cooperative communication by using uplink frequency spectrum. As shown in FIG. 4, D1, D2, and D3 indicate that a base station transmits downlink signals to terminals UE1, UE2, and UE3 by using downlink frequency spectrum; U1, U2, and U3 indicate that UE1, UE2, and UE3 transmit uplink signals to the base station by using uplink frequency spectrum; and U12 and U21, U34 and U43 indicate respectively that UE1 and UE2, UE3 and UE4 perform cooperative communication by using idle timeslots of the uplink frequency spectrum, where UE1 and UE2 employ the second manner to perform the cooperative communication, and UE3 and UE4 employ the first manner to perform the cooperative communication.

It can be seen that, because UE1/UE2 and UE3/UE4 are far away from each other, and transmission power of the UEs is low and path loss of radio channels between the UEs is large (UEs far away from each other are in NLOS environment, and have a low antenna gain), therefore, UE1/UE2 and UE3/UE4 can completely reuse the uplink frequency spectrum in the same idle timeslot without interference. In addition, U3 and U34, U1 and U12, U2 and U21 can also use a two-way relay (two-way relay) network coding technology to implement multiplexing, thereby further improving multiplexing efficiency of the uplink frequency spectrum resource.

Illustrated by an example that U3 and U34 implement multiplexing by using the two-way relay network coding technology, data received by UE3 on D3 by using the downlink frequency spectrum include downlink data of UE4, and if data uploaded to the base station by UE3 through U3 has entirely uplink data of UE4 instead of data of UE3, UE3 is scheduled at the base station to send the timeslots of the uplink data to the base station through U3, and UE3 replaces the data with data for transmission. The base station then receives radio signals carrying the data and obtains the data through correct decoding. Because the base station knows the data, the uplink data of UE4 can be obtained by performing an XOR operation; and at the same time, UE4 also receives the same radio signals in the timeslots of the uplink data sent by UE3 to the base station through U3, and obtains the signals through correct decoding. Because UE4 knows the data, the uplink data of UE4 can be obtained by performing an XOR operation. Therefore, in the above manners, the operation of UE3 forwarding the downlink data of UE4 to UE4 no longer need to occupy the idle timeslots of the uplink frequency spectrum of an FDD carrier wave, so that the base station can allocate the idle timeslots of the uplink frequency spectrum for use in the cooperative communication between the another UE (such as U43 in FIG. 4).

Therefore, the uplink frequency spectrum used for the cooperative communication can obtain very high multiplexing efficiency, including dense space multiplexing, and further implement multiplexing by using the two-way relay network coding technology and the like, thereby implementing the cooperative communication of a large number of UEs by using only a few idle uplink frequency spectrum resources, thereby improving the system capacity by effectively using the uplink frequency spectrum.

### Embodiment 2

As shown in FIG. 5 (please refer to FIG. 2 and FIG. 3 together), a method for cooperative communication in Embodiment 2 of the present invention includes:
Step 201: At least one terminal sends a request of establishing intercommunication with another terminal to a base station, where the request includes communication information and identifiers of the at least one terminal and the another terminal;
Step 202: The at least one terminal receives a response message of the base station, where the response message includes information about an available frequency spectrum resource and the identifiers of the at least one terminal and the another terminal, and the frequency spectrum information is configured to indicate the available frequency spectrum resource allocated by the base station for the intercommunication between the at least one terminal and the another terminal according to the communication information in the request, where the available frequency spectrum resource is idle uplink frequency spectrum;
Step 203: The at least one terminal sends data to the another terminal according to the identifier of the another terminal the identifier of the another terminal and by using the available frequency spectrum resource, or according to the identifiers of the at least one terminal and the another terminal, enables the at least one terminal and the another terminal to perform end-to-end intercommunication by using the available frequency spectrum resource.

Content of the request in the above step 201 includes the identifier of the another terminal required for the intercommunication, a manner of the intercommunication between the at least one terminal and the another terminal, and a size of data required to be transmitted to each other.

As shown in FIG. 2 and FIG. 3a to FIG. 3d, the process and manner of the intercommunication between the terminals in Embodiment 2 of the present invention are the same as those in Embodiment 1 of the present invention.

### Embodiment 3

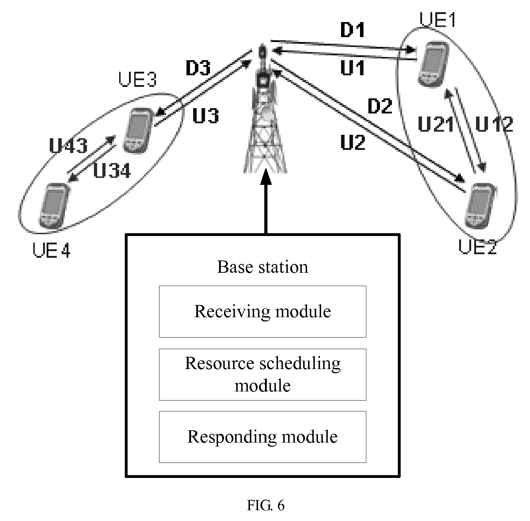

As shown in FIG. 6, a base station in Embodiment 3 of the present invention, configured to transmit a signal to a terminal or receive a signal from a terminal in a mobile communications system, includes a receiving module, a resource scheduling module, and a responding module, where
the receiving module is configured to receive a request for establishing intercommunication with another terminal from at least one terminal, where the request includes communication information and identifiers of the at least one terminal and the another terminal;
the resource scheduling module is configured to, according to the communication information in the request of establishing intercommunication, allocate an available frequency spectrum resource for the intercommunication between the at least one terminal and the another terminal, where the available frequency spectrum resource includes idle uplink frequency spectrum; and
the responding module is configured to send a response message to the at least one terminal and the another terminal, where the response message includes the available frequency spectrum resource and the identifiers of the at least one terminal and the another terminal, so that the at least one terminal can forward data to the another terminal according to the identifier of the another terminal and by using the idle uplink frequency spectrum resource, or the at least one terminal and the another terminal can perform intercommunication according to the identifiers of the at least one terminal and the another terminal and by using the idle uplink frequency spectrum.

The request of the at least one terminal establishing the intercommunication includes the identifier of the another terminal required for the intercommunication, a manner of the intercommunication between the at least one terminal and the another terminal, and a size of data required to be transmitted to each other.

The responding module, according to content of the request, allocates the idle uplink frequency spectrum for the intercommunication between the at least one terminal and the another terminal, and sends information about the allocated frequency spectrum to the at least one terminal.

As shown in FIG. 2 and FIG. 3a to FIG. 3d, the process and manner of the intercommunication between the terminals in Embodiment 3 of the present invention are the same as those in embodiment 1 of the present invention.

### Embodiment 4

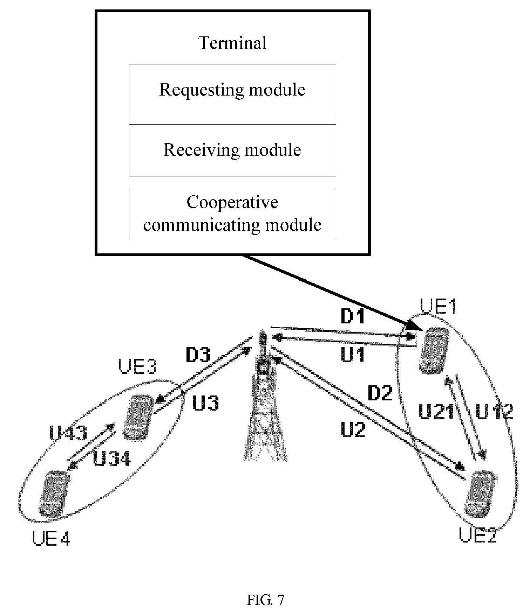

As shown in FIG. 7, a terminal in Embodiment 4 of the present invention includes a requesting module, a receiving module, and a cooperative communication module.

The requesting module is configured to send a request of establishing intercommunication with another terminal to a base station, where the request includes communication information and identifiers of the at least one terminal and the another terminal.

The receiving module is configured to receive a response message of the base station, where the response message includes information about an available frequency spectrum resource and the identifiers of the at least one terminal and the another terminal, and the frequency spectrum information is configured to indicate the available frequency spectrum resource allocated by the base station for the intercommunication between the at least one terminal and the another terminal according to the communication information in the request, where the available frequency spectrum resource is idle uplink frequency spectrum.

The cooperative communication module is configured to, according to the identifier of the another terminal, enable the terminal to send data to the another terminal by using the available frequency spectrum resource, or enable the terminal and the another terminal to perform end-to-end intercommunication according to the identifiers of the at least one terminal and the another terminal and by using the available frequency spectrum resource.

Content of the request sent by the terminal to the base station includes the identifier of the another terminal required for the intercommunication, a manner of the intercommunication between the terminal and the another terminal, and a size of data required to be transmitted to each other.

The another terminal may be one or more terminals.

As shown in FIG. 2 and FIG. 3a to FIG. 3d, the process and manner of the intercommunication between the terminals in Embodiment 4 of the present invention are the same as those in Embodiment 1 of the present invention.

### Embodiment 5

As shown in FIG. 4, a communications system in Embodiment 5 of the present invention includes terminals and a base station, where the terminals include one terminal and another terminal, and the one terminal is configured to send a request of establishing intercommunication with the another terminal to the base station, where the request includes communication information and identifiers of the at least one terminal and the another terminal;

The base station is configured to receive the request of establishing the intercommunication and according to the communication information, allocate an available frequency spectrum resource for the intercommunication between the at least one terminal and the another terminal, where the available frequency spectrum resource is idle uplink frequency spectrum; moreover, the base station is also configured to send a response message to the at least one terminal and the another terminal, where the response message includes information about the available frequency spectrum resource, which is used for indicating the available frequency spectrum resource and the identifiers of the at least one terminal and the another terminal, so that the at least one terminal can send data to the another terminal according to the identifier of the another terminal and by using the available frequency spectrum resource, or the at least one terminal and the another terminal can perform end-to-end intercommunication according to the identifiers of the at least one terminal and the another terminal and by using the available frequency spectrum resource.

As shown in FIG. 2 and FIG. 3a to FIG. 3d, the process and manner of the intercommunication between the terminals in Embodiment 5 of the present invention are the same as those in Embodiment 1 of the present invention.

The communications system provided by the embodiments of the present invention is introduced above in detail, and principles and implementation manners of the present invention are elaborated on herein by using specific examples. The description of the above embodiments is only used to help understand the methods and core idea of the present invention. In addition, with respect to the implementation and applicability of the present invention, modifications and variations may be made by persons of ordinary skill in the art according to the idea of the present invention. Therefore, the specification shall not be construed as a limitation on the present invention.

## Claims

1. A method performed by a base station for cooperative communication between terminals wherein the method comprises:
receiving (101) a request for establishing intercommunication with another terminal from at least one terminal, wherein the request comprises communication information and identifiers of the at least one terminal and the another terminal;
according to the communication information in the request for establishing the intercommunication, allocating (102) an available frequency spectrum resource for the intercommunication between the at least one terminal and the another terminal, wherein the available frequency spectrum resource comprises idle uplink frequency spectrum;
sending (103) a response message to the at least one terminal and the another terminal, wherein the response message comprises information about the available frequency spectrum resource, which is used for indicating the available frequency spectrum resource, and the identifiers of the at least one terminal and the another terminal, so that the at least one terminal sends data to the another terminal according to the identifier of the another terminal and by using the available frequency spectrum resource, or the at least one terminal and the another terminal performs end-to-end intercommunication according to the identifiers of the at least one terminal and the another terminal and by using the available frequency spectrum resource;
**characterized in that**
the communication information in the request of the at least one terminal establishing the intercommunication with the another terminal comprises a selected manner of cooperative communication between the at least one terminal and the another terminal and a size of data required for the intercommunication;
accordingly, the allocation of the available frequency spectrum resource for the intercommunication between the at least one terminal and the another terminal according to the communication information in the request of establishing the intercommunication comprises:
traversing the frequency spectrum resource and obtaining information about idle periods of time of the uplink frequency spectrum, and according to the manner of the cooperative communication between the at least one terminal and the another terminal and the size of the data required for the intercommunication between the at least one terminal and the another terminal, allocating the idle uplink frequency spectrum as the end-to-end available frequency spectrum resource between the at least one terminal and the another terminal.

2. The method according to claim 1 comprising that the at least one terminal sends the data to the another terminal according to the identifier of the another terminal and by using the available frequency spectrum resource comprises: the at least one terminal is a plurality of terminals with the number of at least two, and the base station sends data packets carrying the identifier of the another terminal to the plurality of terminals by using downlink frequency spectrum, so that the plurality of terminals send the data packets to the another terminal according to the identifier of the another terminal and by using the idle uplink frequency spectrum.

3. The method according to claim 1, wherein the selected manner of cooperative communication comprises at least one of following four manners:
data from the base station is forwarded by the at least one terminal to the another terminal according to the identifier of the another terminal and by using the idle uplink frequency spectrum;
data packets are sent by the base station to the at least one terminal and the another terminal respectively by using downlink frequency spectrum, where data packets sent by the base station to the another terminal carry an identifier of the at least one terminal, so that the another terminal send, by using the information about the idle periods of time responded by the base station, data packets to the at least one terminal to which the identifier in the data packets corresponds;
where the at least one terminal is a plurality of terminals with the number of at least two, and data packets carrying an identifier of the another terminal are sent by the base station to the plurality of terminals by using downlink frequency spectrum, so that the plurality of terminals send the data packets carrying the identifier of the another terminal to the another terminal according to the identifier of the another terminal and by using the idle uplink frequency spectrum;
while information about idle periods of time of uplink frequency spectrum is responded by the base station to the at least one terminal, the information about the idle periods of time of the uplink frequency spectrum is also sent by the base station to the another terminal, so that the at least one terminal and the other terminal perform end-to-end intercommunication according to identifiers of the at least one terminal and the other terminals and by using idle uplink frequency spectrum.

4. A base station, configured to transmit a signal to a terminal or receive a signal from a terminal in a mobile communications system, wherein the base station comprises:
a receiving module, configured to receive a request for establishing intercommunication with another terminal from at least one terminal, wherein the request comprises communication information and identifiers of the at least one terminal and the another terminal;
a resource allocation module, configured to, according to the communication information in the request of establishing the intercommunication, allocate an available frequency spectrum resource for the intercommunication between the at least one terminal and the another terminal, wherein the available frequency spectrum resource comprises idle uplink frequency spectrum; and
a responding module, configured to send a response message to the at least one terminal and the another terminal, wherein the response message comprises information about the available frequency spectrum resource, which is used for indicating the available frequency spectrum resource, and the identifiers of the at least one terminal and the another terminal, so that the at least one terminal sends data to the another terminal according to the identifier of the another terminal and by using the available frequency spectrum resource, or the at least one terminal and the another terminal perform the end-to-end intercommunication according to the identifiers of the at least one terminal and the another terminal and by using the available frequency spectrum resource;
**characterized in that**
the communication information in the request of the at least one terminal establishing the intercommunication with the another terminal received by the receiving module comprises a selected manner of cooperative communication between the at least one terminal and the another terminal and a size of data required for the intercommunication;
the resource allocating module is configured to traverse the frequency spectrum resource and obtain information about idle periods of time of the uplink frequency spectrum, and according to the manner of the cooperative communication between the at least one terminal and the another terminal and the size of the data required for the intercommunication between the at least one terminal and the another terminal, allocate the idle uplink frequency spectrum as the end-to-end available frequency spectrum resource between the at least one terminal and the another terminal.

5. The base station according to claim 4, wherein the selected manner of cooperative communication comprises at least one of following four manners:
data from the base station is forwarded by the at least one terminal to the another terminal according to the identifier of the another terminal and by using the idle uplink frequency spectrum;
data packets are sent by the base station to the at least one terminal and the another terminal respectively by using downlink frequency spectrum, where data packets sent by the base station to the another terminal carry an identifier of the at least one terminal, so that the another terminal send, by using the information about the idle periods of time responded by the base station, data packets to the at least one terminal to which the identifier in the data packets corresponds;
where the at least one terminal is a plurality of terminals with the number of at least two, and data packets carrying an identifier of the another terminal are sent by the base station to the plurality of terminals by using downlink frequency spectrum, so that the plurality of terminals send the data packets carrying the identifier of the another terminal to the another terminal according to the identifier of the another terminal and by using the idle uplink frequency spectrum;
while information about idle periods of time of uplink frequency spectrum is responded by the base station to the at least one terminal, the information about the idle periods of time of the uplink frequency spectrum is also sent by the base station to the another terminal, so that the at least one terminal and the other terminal perform end-to-end intercommunication according to identifiers of the at least one terminal and the other terminals and by using idle uplink frequency spectrum.

## Patentansprüche

1. Verfahren, das durch eine Basisstation ausgeführt wird, zur kooperativen Kommunikation zwischen Endgeräten, wobei das Verfahren Folgendes umfasst:
Empfangen (101) einer Anforderung zum Aufbauen von Wechselkommunikation mit einem weiteren Endgerät von wenigstens einem Endgerät, wobei die Anforderung Kommunikationsinformationen und Kennungen des wenigstens einen Endgeräts und des weiteren Endgeräts umfasst;
gemäß den Kommunikationsinformationen in der Anforderung zum Aufbauen der Wechselkommunikation Zuweisen (102) eines verfügbaren Frequenzspektrumbetriebsmittels für die Wechselkommunikation zwischen dem wenigstens einen Endgerät und dem weiteren Endgerät, wobei das verfügbare Frequenzspektrumbetriebsmittel das freie Aufwärtsstreckenfrequenzspektrum umfasst;
Senden (103) einer Antwortnachricht zu dem wenigstens einen Endgerät und dem weiteren Endgerät, wobei die Antwortnachricht Informationen über das verfügbare Frequenzspektrumbetriebsmittel, die zum Angeben des verfügbaren Frequenzspektrumbetriebsmittels verwendet werden, und die Kennungen des wenigstens einen Endgeräts und des weiteren Endgeräts umfasst, so dass das wenigstens eine Endgerät Daten zu dem weiteren Endgerät gemäß der Kennung des weiteren Endgeräts und durch Verwenden des verfügbaren Frequenzspektrumbetriebsmittels sendet oder das wenigstens eine Endgerät und das weitere Endgerät Ende-zu-Ende-Wechselkommunikation gemäß den Kennungen des wenigstens einen Endgeräts und des weiteren Endgeräts und durch Verwenden des verfügbaren Frequenzspektrumbetriebsmittels ausführt;
**dadurch gekennzeichnet, dass**
die Kommunikationsinformationen in der Anforderung des wenigstens einen Endgeräts, das die Wechselkommunikation mit dem weiteren Endgerät aufbaut, eine ausgewählte Art kooperativer Kommunikation zwischen dem wenigstens einen Endgerät und dem weiteren Endgerät und eine Größe von Daten, die für die Wechselkommunikation erforderlich sind, umfassen;
dementsprechend das Zuweisen des verfügbaren Frequenzspektrumbetriebsmittels für die Wechselkommunikation zwischen dem wenigstens einen Endgerät und dem weiteren Endgerät gemäß den Kommunikationsinformationen in der Anforderung zum Aufbauen der Wechselkommunikation Folgendes umfasst:
Absuchen des Frequenzspektrumbetriebsmittels und Erhalten von Informationen über freie Zeitspannen des Aufwärtsstreckenfrequenzspektrums und gemäß der Art der kooperativen Kommunikation zwischen dem wenigstens einen Endgerät und dem weiteren Endgerät und der Größe der Daten, die für die Wechselkommunikation zwischen dem wenigstens einen Endgerät und dem weiteren Endgerät erforderlich sind, Zuweisen des freien Aufwärtsstreckenfrequenzspektrums als die Ende-zu-Ende verfügbaren Frequenzspektrumbetriebsmittel zwischen dem wenigstens einen Endgerät und dem weiteren Endgerät.

2. Verfahren nach Anspruch 1, das umfasst, dass das Senden durch das wenigstens eine Endgerät der Daten zu dem weiteren Endgerät gemäß der Kennung des weiteren Endgeräts und durch Verwenden des verfügbaren Frequenzspektrumbetriebsmittels Folgendes umfasst: das wenigstens eine Endgerät ist mehrere Endgeräte mit der Anzahl von wenigstens zwei, und die Basisstation sendet Datenpakete, die die Kennung des weiteren Endgeräts führen, zu den mehreren Endgeräten durch Verwenden des Abwärtsstreckenfrequenzspektrums, so dass die mehreren Endgeräte die Datenpakete zu dem weiteren Endgerät gemäß der Kennung des weiteren Endgeräts und durch Verwenden des freien Aufwärtsstreckenfrequenzspektrums senden.

3. Verfahren nach Anspruch 1, wobei die ausgewählte Art zur kooperativen Kommunikation wenigstens eine aus den folgenden vier Arten umfasst:
Daten von der Basisstation werden durch das wenigstens eine Endgerät zu dem weiteren Endgerät gemäß der Kennung des weiteren Endgeräts und durch Verwenden des freien Aufwärtsstreckenfrequenzspektrums weitergeleitet;
Datenpakete werden durch die Basisstation zu dem wenigstens einen Endgerät bzw. dem weiteren Endgerät durch Verwenden des Abwärtsstreckenfrequenzspektrums gesendet, wobei Datenpakete, die durch die Basisstation zu dem weiteren Endgerät gesendet werden, eine Kennung des wenigstens einen Endgeräts führen, so dass das weitere Endgerät durch Verwenden der Informationen über freie Zeitspannen, die durch die Basisstation zurückgemeldet werden, Datenpakete zu dem wenigstens einen Endgerät, dem die Kennung in den Datenpaketen entspricht, sendet;
wobei das wenigstens eine Endgerät mehrere Endgeräte mit der Anzahl von wenigstens zwei ist, und Datenpakete, die eine Kennung des weiteren Endgeräts führen, werden durch die Basisstation zu den mehreren Endgeräten durch Verwenden des Abwärtsstreckenfrequenzspektrums gesendet, so dass die mehreren Endgeräte die Datenpakete, die die Kennung des weiteren Endgeräts führen, zu dem weiteren Endgerät gemäß der Kennung des weiteren Endgeräts und durch Verwenden des freien Aufwärtsstreckenfrequenzspektrums senden;
während Informationen über freie Zeitspannen des Aufwärtsstreckenfrequenzspektrums durch die Basisstation zu dem wenigstens einen Endgerät zurückgemeldet werden, werden die Informationen über die freien Zeitspannen des Aufwärtsstreckenfrequenzspektrums auch durch die Basisstation zu dem weiteren Endgerät gesendet, so dass das wenigstens eine Endgerät und das andere Endgerät Ende-zu-Ende-Wechselkommunikation gemäß Kennungen des wenigstens einen Endgeräts und des anderen Endgeräts und durch Verwenden des freien Aufwärtsstreckenfrequenzspektrums ausführen.

4. Basisstation, die konfiguriert ist, in einem Mobilkommunikationssystem ein Signal zu einem Endgerät zu senden oder ein Signal von einem Endgerät zu empfangen, wobei die Basisstation Folgendes umfasst:
ein Empfangsmodul, das konfiguriert ist, eine Anforderung zum Aufbauen von Wechselkommunikation mit einem weiteren Endgerät von wenigstens einem Endgerät zu empfangen, wobei die Anforderung Kommunikationsinformationen und Kennungen des wenigstens einen Endgeräts und des weiteren Endgeräts umfasst;
ein Betriebsmittelzuweisungsmodul, das konfiguriert ist, gemäß den Kommunikationsinformationen in der Anforderung zum Aufbauen der Wechselkommunikation ein verfügbares Frequenzspektrumbetriebsmittels für die Wechselkommunikation zwischen dem wenigstens einen Endgerät und dem weiteren Endgerät zuzuweisen, wobei das verfügbare Frequenzspektrumbetriebsmittel ein freies Aufwärtsstreckenfrequenzspektrum umfasst; und
ein Antwortmodul, das konfiguriert ist, eine Antwortnachricht zu dem wenigstens einen Endgerät und dem weiteren Endgerät zu senden, wobei die Antwortnachricht Informationen über das verfügbare Frequenzspektrumbetriebsmittel, die zum Angeben des verfügbaren Frequenzspektrumbetriebsmittels verwendet werden, und die Kennungen des wenigstens einen Endgeräts und des weiteren Endgeräts umfasst, so dass das wenigstens eine Endgerät Daten zu dem weiteren Endgerät gemäß der Kennung des weiteren Endgeräts und durch Verwenden des verfügbaren Frequenzspektrumbetriebsmittels sendet, oder das wenigstens eine Endgerät und das weitere Endgerät Ende-zu-Ende-Wechselkommunikation gemäß den Kennungen des wenigstens einen Endgeräts und des weiteren Endgeräts und durch Verwenden des verfügbaren Frequenzspektrumbetriebsmittels ausführen;
**dadurch gekennzeichnet, dass**
die Kommunikationsinformationen in der Anforderung des wenigstens einen Endgeräts, das die Wechselkommunikation mit dem weiteren Endgerät aufbaut, die durch das Empfangsmodul empfangen werden, eine ausgewählte Art kooperativer Kommunikation zwischen dem wenigstens einen Endgerät und dem weiteren Endgerät und eine Größe von Daten, die für die Wechselkommunikation erforderlich sind, umfassen;
das Betriebsmittelzuweisungsmodul konfiguriert ist, das Frequenzspektrumbetriebsmittel abzusuchen und Informationen über freie Zeitspannen des Aufwärtsstreckenfrequenzspektrums und gemäß der Art der kooperativen Kommunikation zwischen dem wenigstens einen Endgerät und dem weiteren Endgerät und der Größe der Daten, die für die Wechselkommunikation zwischen dem wenigstens einen Endgerät und dem weiteren Endgerät erforderlich sind, zu erhalten, das freie Aufwärtsstreckenfrequenzspektrum als die Ende-zu-Ende verfügbaren Frequenzspektrumbetriebsmittel zwischen dem wenigstens einen Endgerät und dem weiteren Endgerät zuzuweisen.

5. Basisstation nach Anspruch 4, wobei die ausgewählte Art der kooperativen Kommunikation wenigstens eine aus den folgenden vier Arten umfasst:
Daten von der Basisstation werden durch das wenigstens eine Endgerät zu dem weiteren Endgerät gemäß der Kennung des weiteren Endgeräts und durch Verwenden des freien Aufwärtsstreckenfrequenzspektrums weitergeleitet;
Datenpakete werden durch die Basisstation zu dem wenigstens einen Endgerät bzw. dem weiteren Endgerät durch Verwenden des Abwärtsstreckenfrequenzspektrums gesendet, wobei Datenpakete, die durch die Basisstation zu dem weiteren Endgerät gesendet werden, eine Kennung des wenigstens einen Endgeräts führen, so dass das weitere Endgerät durch Verwenden der Informationen über die freien Zeitspannen, die durch die Basisstation zurückgemeldet werden, Datenpakete zu dem wenigstens einen Endgerät, dem die Kennung in den Datenpaketen entspricht, sendet;
wobei das wenigstens eine Endgerät mehrere Endgeräte mit der Anzahl von wenigstens zwei ist, und Datenpakete, die die Kennung des weiteren Endgeräts führen, durch die Basisstation zu den mehreren Endgeräten durch Verwenden des Abwärtsstreckenfrequenzspektrums gesendet werden, so dass die mehreren Endgeräte die Datenpakete, die die Kennung des weiteren Endgeräts führen, zu dem weiteren Endgerät gemäß der Kennung des weiteren Endgeräts und durch Verwenden des freien Aufwärtsstreckenfrequenzspektrums senden;
während Informationen über freie Zeitspannen des Aufwärtsstreckenfrequenzspektrums durch die Basisstation zu dem wenigstens einen Endgerät zurückgemeldet werden, werden die Informationen über die freien Zeitspannen des Aufwärtsstreckenfrequenzspektrums auch durch die Basisstation zu dem weiteren Endgerät gesendet, so dass das wenigstens eine Endgerät und das andere Endgerät Ende-zu-Ende-Wechselkommunikation gemäß Kennungen des wenigstens einen Endgeräts und des anderen Endgeräts und durch Verwenden des freien Aufwärtsstreckenfrequenzspektrums ausführen.

## Revendications

1. Procédé exécuté par une station de base pour une communication coopérative entre des terminaux, le procédé comprenant les étapes suivantes :
recevoir (101) une requête pour établir une intercommunication avec un autre terminal à partir d'au moins un terminal, la requête comportant des informations de communication et des identifiants dudit terminal et de l'autre terminal ;
selon les informations de communication dans la requête pour établir l'intercommunication, attribuer (102) une ressource de spectre de fréquence disponible pour l'intercommunication entre ledit terminal et l'autre terminal, la ressource de spectre de fréquence disponible comportant un spectre de fréquence de liaison montante inactif ;
envoyer (103) un message de réponse audit terminal et à l'autre terminal, le message de réponse contenant des informations concernant la ressource de spectre de fréquence disponible, qui sont utilisées pour indiquer la ressource de spectre de fréquence disponible, et les identifiants dudit terminal et de l'autre terminal, de sorte que ledit terminal envoie des données à l'autre terminal selon l'identifiant de l'autre terminal et en utilisant la ressource de spectre de fréquence disponible, ou que ledit terminal et l'autre terminal exécutent une intercommunication de bout en bout selon les identifiants dudit terminal et de l'autre terminal et en utilisant la ressource de spectre de fréquence disponible ;
**caractérisé en ce que**
les informations de communication dans la requête dudit terminal établissant l'intercommunication avec l'autre terminal comprennent un mode sélectionné de communication coopérative entre ledit terminal et l'autre terminal et une taille de données requises pour l'intercommunication ;
en conséquence, l'attribution de la ressource de spectre de fréquence disponible pour l'intercommunication entre ledit terminal et l'autre terminal selon les informations de communication contenues dans la requête d'établissement de l'intercommunication comprend :
traverser la ressource de spectre de fréquence et obtenir des informations concernant des périodes inactives de temps du spectre de fréquence de liaison montante, et selon le mode de la communication coopérative entre ledit terminal et l'autre terminal et la taille des données requises pour l'intercommunication entre ledit terminal et l'autre terminal, attribuer le spectre de fréquence de liaison montante inactif comme la ressource de spectre de fréquence disponible de bout en bout entre ledit terminal et l'autre terminal.

2. Procédé selon la revendication 1, comprenant : ledit terminal envoie les données à l'autre terminal selon l'identifiant de l'autre terminal et en utilisant la ressource de spectre de fréquence disponible comprend : ledit terminal est une pluralité de terminaux dont le nombre est au moins deux, et la station de base envoie des paquets de données contenant l'identifiant de l'autre terminal à la pluralité de terminaux en utilisant un spectre de fréquence de liaison descendante, de sorte que la pluralité de terminaux envoient les paquets de données à l'autre terminal selon l'identifiant de l'autre terminal et en utilisant le spectre de fréquence de liaison montante inactif.

3. Procédé selon la revendication 1, dans lequel le mode sélectionné de communication coopérative comprend au moins un des quatre modes suivants :
des données provenant de la station de base sont transmises par ledit terminal à l'autre terminal selon l'identifiant de l'autre terminal et en utilisant le spectre de fréquence de liaison montante inactif ;
des paquets de données sont envoyés par la station de base audit terminal et à l'autre terminal respectivement en utilisant un spectre de fréquence de liaison descendante, des paquets de données envoyés par la station de base à l'autre terminal contenant un identifiant dudit terminal, afin que l'autre terminal envoie, en utilisant les informations concernant les périodes inactives de temps retournées par la station de base, des paquets de données audit terminal auquel l'identifiant contenu dans les paquets de données correspond ;
ledit terminal étant une pluralité de terminaux dont le nombre est au moins deux, et des paquets de données contenant un identifiant de l'autre terminal étant envoyés par la station de base à la pluralité de terminaux en utilisant un spectre de fréquence de liaison descendante, afin que la pluralité de terminaux envoient les paquets de données contenant l'identifiant de l'autre terminal à l'autre terminal selon l'identifiant de l'autre terminal et en utilisant le spectre de fréquence de liaison montante inactif ;
tandis que des informations concernant des périodes inactives de temps de spectre de fréquence de liaison montante sont retournées par la station de base audit terminal, les informations concernant les périodes inactives de temps du spectre de fréquence de liaison montante sont également envoyées par la station de base à l'autre terminal, afin que ledit terminal et l'autre terminal exécutent une intercommunication de bout en bout selon des identifiants dudit terminal et des autres terminaux et en utilisant un spectre de fréquence de liaison montante inactif.

4. Station de base, configurée pour transmettre un signal à un terminal ou recevoir un signal à partir d'un terminal dans un système de communications mobile, la station de base comprenant :
un module de réception, configuré pour recevoir une requête d'établissement d'une intercommunication avec un autre terminal à partir d'au moins un terminal, la requête comportant des informations de communication et des identifiants dudit terminal et de l'autre terminal ;
un module d'attribution de ressource, configuré pour attribuer, selon les informations de communication contenues dans la requête d'établissement de l'intercommunication, une ressource de spectre de fréquence disponible pour l'intercommunication entre ledit terminal et l'autre terminal, la ressource de spectre de fréquence disponible comportant un spectre de fréquence de liaison montante inactif ; et
un module de réponse, configuré pour envoyer un message de réponse audit terminal et à l'autre terminal, le message de réponse contenant des informations concernant la ressource de spectre de fréquence disponible, qui sont utilisées pour indiquer la ressource de spectre de fréquence disponible, et les identifiants dudit terminal et de l'autre terminal, afin que ledit terminal envoie des données à l'autre terminal selon l'identifiant de l'autre terminal et en utilisant la ressource de spectre de fréquence disponible, ou que ledit terminal et l'autre terminal exécutent l'intercommunication de bout en bout selon les identifiants dudit terminal et de l'autre terminal et en utilisant la ressource de spectre de fréquence disponible ;
**caractérisée en ce que**
les informations de communication dans la requête dudit terminal établissant l'intercommunication avec l'autre terminal reçues par le module de réception comprennent un mode sélectionné de communication coopérative entre ledit terminal et l'autre terminal et une taille de données requises pour l'intercommunication ;
le module d'attribution de ressource est configuré pour traverser la ressource de spectre de fréquence et obtenir des informations concernant des périodes inactives de temps du spectre de fréquence de liaison montante, et selon le mode de la communication coopérative entre ledit terminal et l'autre terminal et la taille des données requises pour l'intercommunication entre ledit terminal et l'autre terminal, attribuer le spectre de fréquence de liaison montante inactif comme la ressource de spectre de fréquence disponible de bout en bout entre ledit terminal et l'autre terminal.

5. Station de base selon la revendication 4, le mode sélectionné de communication coopérative comprenant au moins un des quatre modes suivants :
des données provenant de la station de base sont transmises par ledit terminal à l'autre terminal selon l'identifiant de l'autre terminal et en utilisant le spectre de fréquence de liaison montante inactif ;
des paquets de données sont envoyés par la station de base audit terminal et à l'autre terminal respectivement en utilisant un spectre de fréquence de liaison descendante, des paquets de données envoyés par la station de base à l'autre terminal contenant un identifiant dudit terminal, afin que l'autre terminal envoie, en utilisant les informations concernant les périodes inactives de temps retournées par la station de base, des paquets de données audit terminal auquel l'identifiant contenu dans les paquets de données correspond ;
ledit terminal étant une pluralité de terminaux dont le nombre est au moins deux, et des paquets de données contenant un identifiant de l'autre terminal étant envoyés par la station de base à la pluralité de terminaux en utilisant un spectre de fréquence de liaison descendante, afin que la pluralité de terminaux envoient les paquets de données contenant l'identifiant de l'autre terminal à l'autre terminal selon l'identifiant de l'autre terminal et en utilisant le spectre de fréquence de liaison montante inactif ;
tandis que des informations concernant des périodes inactives de temps de spectre de fréquence de liaison montante sont retournées par la station de base audit terminal, les informations concernant les périodes inactives de temps du spectre de fréquence de liaison montante sont également envoyées par la station de base à l'autre terminal, afin que ledit terminal et l'autre terminal exécutent une intercommunication de bout en bout selon des identifiants dudit terminal et des autres terminaux et en utilisant un spectre de fréquence de liaison montante inactif.
